# EUROPEAN PATENT APPLICATION

(11) **EP 4 477 501 A1**
(43) Date of publication of application: **18.12.2024**
(21) Application number: 23842106.9
(22) Date of filing: 30.06.2023
(51) Int. Cl.: B62D 25/08, B62D 23/00, B60K 1/04, B60L 50/60

(54) **DASH PANEL LOWER CROSS BEAM STRUCTURE AND AUTOMOBILE**

(30) Priority: 20.07.2022 CN 202210861236
(71) Applicant: Voyah Automobile Technology Company Ltd., Hanyang District Wuhan City, Hubei 430050 (CN)
(72) Inventor: LI, Gang, Wuhan, Hubei 430050 (CN); YUN, Tao, Wuhan, Hubei 430050 (CN); ZHOU, Zhongbiao, Wuhan, Hubei 430050 (CN); HOU, Chunsheng, Wuhan, Hubei 430050 (CN); ZHANG, Zhe, Wuhan, Hubei 430050 (CN); HUANG, Bo, Wuhan, Hubei 430050 (CN); YUAN, Dong, Wuhan, Hubei 430050 (CN); HAN, Jianyong, Wuhan, Hubei 430050 (CN); CAO, Weilin, Wuhan, Hubei 430050 (CN); JIANG, Minglong, Wuhan, Hubei 430050 (CN)
(74) Representative: Valet Patent Services Limited
(86) International application number: PCT/CN2023/105305
(87) International publication number: WO 2024/017041

(57) **Abstract**

A front-dash-board lower crossbeam structure and a vehicle. The front-dash-board lower crossbeam structure includes a first crossbeam layer (1) and a second crossbeam layer (2). The second crossbeam layer (2) is disposed at a side of the first crossbeam layer (1) and a hollow cavity is disposed between the second crossbeam layer (2) and the first crossbeam layer (1). When a front of the vehicle is subjected to a head-on collision, an impact force is transmitted through a left longitudinal beam and a right longitudinal beam of the vehicle frame, after the first crossbeam layer (1) and the second crossbeam layer (2) absorb a collision energy, a deformation begins to occur at the first connection section (14), the second connection section (15) and the third connection section (23). The battery pack is protected by the deformation of the first crossbeam layer (1) and the second crossbeam layer (2) and a space for the deformation provided by the hollow cavity between the first crossbeam layer (1) and the second crossbeam layer (2).

## Description

### CROSS-REFERENCE TO RELATED APPLICATIONS

The application claims the priority to Chinese patent application No. 202210861236.9 filed on July 20, 2022, the entire content of which is incorporated herein by reference.

### TECHNICAL FIELD

The application relates to a technical field of a structure of a vehicle body, and in particular to a front-dash-board lower crossbeam structure and a vehicle.

### BACKGROUND

At present, regarding a structure of a vehicle body, the structure of the vehicle body of a new energy vehicle, due to an arrangement of a battery under a floor, is different from that of a traditional fuel vehicle. Since in new energy vehicles, longitudinal beams, which extend throughout front and rear in the traditional fuel vehicle, can only extend to a front end of a battery pack, when a vehicle body of the new energy vehicle is subjected to a head-on collision, most of a collision energy will be transmitted to the battery pack of the new energy vehicle, causing the battery pack of the new energy vehicle to be subjected to greater collision energy. Since a span between a left longitudinal beam and right longitudinal beam of a vehicle frame of the new energy vehicle is large, a simple one-piece crossbeam is likely to be bent, which in turn causes the directly bent one-piece crossbeam to likely press on the battery pack, thereby causing the battery pack to be hit. The hitted battery pack poses a great threat to the driver and passengers.

### SUMMARY

In view of defects existing in the related art, the application provides a front-dash-board lower crossbeam structure and a vehicle to solve a problem that a battery pack in the related art has a great safety hazard when a head-on collision occurs in a front portion of the vehicle body.

A front-dash-board lower crossbeam structure is provided according to a first aspect of the present application, which includes a first crossbeam layer and a second crossbeam layer, wherein, the first crossbeam layer comprises a first connection plate, a second connection plate and a third connection plate which are connected in sequence; an end of the first connection plate away from the second connection plate is configured to be fixedly connected to a left longitudinal beam of a vehicle frame, and an end of the third connection plate away from the second connection plate is configured to be fixedly connected to a right longitudinal beam; a first connection section and a second connection section are disposed between the second connection plate and the first connection plate, and between the second connection plate and the third connection plate respectively; the second crossbeam layer is stacked at the first crossbeam layer, and a hollow cavity is disposed between the second crossbeam layer and the first crossbeam layer; the second crossbeam layer comprises a first reinforcement plate and a second reinforcement plate which are connected to one another, and a third connection section is disposed between the first reinforcement plate and the second reinforcement plate; and a projection of the third connection section on the first crossbeam layer is staggered with the first connection section and the second connection section; the projection of the third connection section on the first crossbeam layer is located between the first connection section and the second connection section; projections of the first connection section, the second connection section and the third connection section on the first crossbeam layer are parallel to one another.

A vehicle is also provided according to a second aspect of the application, which includes a battery pack, a left longitudinal beam and a right longitudinal beam of a frame, and a lower crossbeam structure of a front dash board as described above, wherein the first crossbeam layer and the second crossbeam layer are fixedly disposed between the left longitudinal beam and the right longitudinal beam of the vehicle frame, and the battery pack is fixedly disposed at a side of the front-dash-board lower crossbeam structure away from a front of the vehicle.

### BRIEF DESCRIPTION OF DRAWINGS

In order to more clearly illustrate the technical solutions in the embodiments of the disclosure, the accompanying drawings required for use in the description of the embodiments will be briefly introduced in the following. Obviously, the accompanying drawings described below are only some embodiments of the disclosure. For those skilled in the art, other accompanying drawings can be obtained based on these drawings without creative work.
FIG. 1 is an exploded view of a front-dash-board lower crossbeam structure according to some embodiments of the present application;
FIG.2 is a schematic structural diagram of a side of a first crossbeam layer of a front-dash-board lower crossbeam structure according to some embodiments of the present application; and
FIG. 3 is a cross-sectional view taken along a section line A-A in FIG. 2.

Reference numerals: 1, first crossbeam layer; 11, first connection plate; 12, second connection plate; 13, third connection plate; 14, first connection section; 15, second connection section; 2, second crossbeam layer; 21, first reinforcement plate; 22, second reinforcement plate; 23, third connection section; 3, positioning column; 4, reinforcement groove.

### DESCRIPTION OF EMBODIMENTS

The present application is further described below in conjunction with the accompanying drawings and embodiments. It should be noted that the description of these embodiments is used to help understand the present application, but does not constitute a limitation to the present application. Specific structural and functional details disclosed herein are merely intended to describe illustrative embodiments of the present application. The application may, however, be embodied in many alternate forms and should not be construed as limited to the embodiments set forth herein.

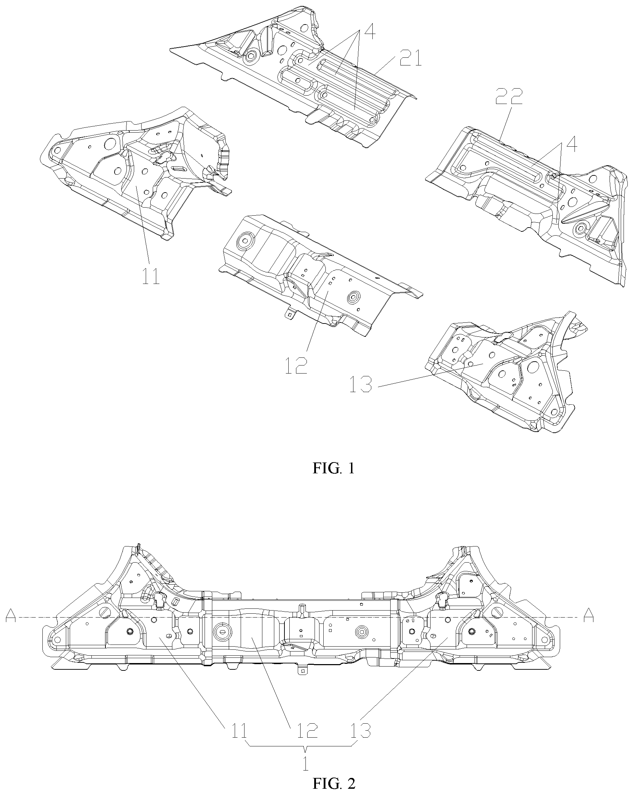

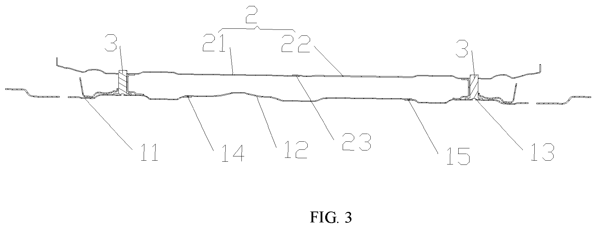

FIG. 1 is an exploded view of a front-dash-board lower crossbeam structure according to some embodiments of the present application; FIG.2 is a schematic structural diagram of a side of a first crossbeam layer of a front-dash-board lower crossbeam structure according to some embodiments of the present application; and FIG. 3 is a cross-sectional view taken along a section line A-A in FIG. 2. As shown in FIG. 1 to FIG. 3, a front-dash-board lower crossbeam structure is provided according to a first aspect of the present application, which includes a first crossbeam layer 1 and a second crossbeam layer 2. The first crossbeam layer 1 includes a first connection plate 11, a second connection plate 12 and a third connection plate 13 which are connected in sequence. An end of the first connection plate 11 away from the second connection plate 12 is configured to be fixedly connected to a left longitudinal beam of a vehicle frame. An end of the third connection plate 13 away from the second connection plate 12 is configured to be fixedly connected to a right longitudinal beam. A first connection section 14 and a second connection section 15 are disposed between the second connection plate 12 and the first connection plate 11, and between the second connection plate 12 and the third connection plate 13, respectively.

According to an entire actual processing and arrangement of the vehicle frame, the first connection plate 11 and the second connection plate 12 may be fixedly connected to the left longitudinal beam and/or the right longitudinal beam of the vehicle frame by welding.

The second crossbeam layer 2 is disposed at a side of the first crossbeam layer 1. A hollow cavity is disposed between the second crossbeam layer 2 and the first crossbeam layer 1. The second crossbeam layer 2 includes a first reinforcement plate 21 and a second reinforcement plate 22 connected to one another. A third connection section 23 is disposed between the first reinforcement plate 21 and the second reinforcement plate 22, and projections of the first connection section 14, the second connection section 15 and the third connection section 23 on the first crossbeam layer 1 are located at different positions.

A working principle of technical solution according to some embodiments of the present application is as follows: a front-dash-board lower crossbeam structure disposed between the left longitudinal beam and the right longitudinal beam of the vehicle frame includes a first crossbeam layer 1, a second crossbeam layer 2, and the first crossbeam layer 1 includes the first connection plate 11, the second connection plate 12 and the third connection plate 13 which are connected in sequence; a first connection section 14 and a second connection section 15 are disposed between the second connection plate 12 and the first connection plate 11, and between the second connection plate 12 and the third connection plate 13, respectively; the second crossbeam layer 2 is disposed at a side of the first crossbeam layer 1, and a hollow cavity is disposed between the second crossbeam layer 2 and the first crossbeam layer 1; the second crossbeam layer 2 includes a first reinforcement plate 21 and a second reinforcement plate 22 connected to one another; a third connection section 23 is disposed between the first reinforcement plate 21 and the second reinforcement plate 22. After the front-dash-board lower crossbeam structure is installed on the vehicle frame, the battery pack is disposed at an side of the front-dash-board lower crossbeam structure away from a front of the vehicle. When the front of the vehicle is subjected to a head-on collision, an impact force is transmitted to the front-dash-board lower crossbeam structure through the left longitudinal beam and the right longitudinal beam of the vehicle frame, and forms a collapse deformation guide for the first crossbeam layer 1 and the second crossbeam layer 2 and the hollow cavity between the first crossbeam layer 1 and the second crossbeam layer 2 through the first connection section 14, the second connection section 15 and the third connection section 23, that is, after the first crossbeam layer 1 and the second crossbeam layer 2 absorb a collision energy, a deformation begins to occur at the first connection section 14, the second connection section 15 and the third connection section 23, and the battery pack is protected by a deformation of the first crossbeam layer 1 and the second crossbeam layer 2 and a deformed space provided by the hollow cavity between the first crossbeam layer 1 and the second crossbeam layer 2. Since projections of the first connection section 14, the second connection section 15 and the third connection section 23 on the first crossbeam layer 1 are located at different positions, rapid deformations of the first crossbeam layer 1 and the second crossbeam layer 2 at a same position are avoided, and thus an absorption performance for the collision energy of the hollow cavity formed by the first crossbeam layer 1 and the second crossbeam layer 2 is improved, which is advantageous for the front-dash-board lower crossbeam structure to resist a deformation of the vehicle body in an impact direction, thereby improving a safety of the battery pack and the vehicle body.

In some embodiments, a projection of the third connection section 23 on the first crossbeam layer 1 is located between the first connection section 14 and the second connection section 15. That is to say, when the first crossbeam layer 1 and the second crossbeam layer 2 are to be deformed, a deformation begins to occur at the first connection section 14, the second connection section 15 and the third connection section 23. The first connection section 14, the second connection section 15 and the third connection section 23 serve as guide points for the deformation. In a width direction of the vehicle body, the first connection section 14, the second connection section 15 and the third connection section 23 are disposed in a stagger manner. A deformation position of the first connection section 14 corresponds to the first reinforcement plate 21, a deformation position of the second connection section 15 corresponds to the second reinforcement plate 22, and a deformation position of the third connection section 23 corresponds to the second connection plate 12, thereby improving an absorption capacity for the collision energy during an overall deformation process.

In some embodiments, the first connection section 14 and the second connection section 15 are disposed parallel to one another, so that extension directions of lengths of the first connection section 14 and the second connection section 15 are consistent with a collision direction of the vehicle body, so as to resist the deformation better.

In some embodiments, the projections of the first connection section 14, the second connection section 15 and the third connection section 23 on the first crossbeam layer 1 are parallel to one another, thereby further maintaining a consistency of the first crossbeam layer 1 and the second crossbeam layer 2 at respective junctions, avoiding conflicts among the first connection plate 11, the second connection plate 12 and the third connection plate 13 or between the first reinforcement plate 21 and the second reinforcement plate 22 which destroy collapse directions of the deformations of the first crossbeam layer 1 and the second crossbeam layer 2, thereby improving a controllability of the deformation.

In some embodiments, a plurality of positioning columns 3 are disposed between the first crossbeam layer 1 and the second crossbeam layer 2. An installation position is provided at a center of the positioning column 3. The positioning column 3 is fixedly connected to the first crossbeam layer 1 and the second crossbeam layer 2, respectively, to facilitate a fixation between the first crossbeam layer 1 and the second crossbeam layer 2, and to maintain the hollow cavity of the first crossbeam layer 1 and the second crossbeam layer 2 with a certain degree of anti-deformation ability.

In some embodiments, since there is the hollow cavity between the first crossbeam layer 1 and the second crossbeam layer 2, when the battery pack needs to be installed, if the battery pack is not connected to the first crossbeam layer 1 or the second crossbeam layer 2, there will be no fixing point for the battery pack between the left longitudinal beam and right longitudinal beam of the vehicle frame which have a larger span therebetween, and thus an installation stability of the battery pack will be greatly reduced. However, if the battery pack is directly installed on the first crossbeam layer 1 or the second crossbeam layer 2, the first crossbeam layer 1 or the second crossbeam layer 2 will be directly deformed due to factors such as an overall volume and weight of the battery pack. An overall stability of the battery pack can be improved by using the positioning column 3 as the installation position for the battery pack in this area. In addition, the plurality of installation points of the battery pack and connection points of the battery pack to other portions of the vehicle body make an overall modality of the vehicle body more stable through the installation of the battery pack, thereby further improving a strength of the vehicle body and ensuring a driving safety.

In some embodiments, in order to improve a connection integrity for the vehicle body, an end away from the battery pack of the positioning column 3 may be fixedly connected to the vehicle body, and may be fixed by pre-installation. Regardless of whether the battery pack is fixed to the positioning column 3, a stable positional relationship between the first crossbeam layer 1 or the second crossbeam layer 2 and the vehicle body can be maintained.

In some embodiments, a cross section along a direction parallel to the first connection section 14 of the first crossbeam layer 1 has a bend. The cross section of the first crossbeam layer 1 is disposed with the bend to improve an overall structural stability of the first crossbeam layer 1 and increase a bending resistance of the first crossbeam layer 1.

In some embodiments, a side edge of the second crossbeam layer 2 extends onto the first crossbeam layer 1 and is fixedly connected to the first crossbeam layer 1 to increase a connection area between the first crossbeam layer 1 and the second crossbeam layer 2 and improve relative stability.

In some embodiments, the first connection section 14, the second connection section 15 and the third connection section 23 are welded sections, respectively, thereby improving a processing efficiency and also improving a connection stability.

In some embodiments, the second crossbeam layer 2 is provided with reinforcement grooves 4 extending in different directions to improve an overall structural stability of the second crossbeam layer 2 and increase a bending resistance of the second crossbeam layer 2.

A vehicle is also provided based on a same inventive concept and according to a second aspect of the application, which includes a battery pack, a left longitudinal beam and a right longitudinal beam of a vehicle frame, and the front-dash-board lower crossbeam structure as described above. The first crossbeam layer 1 and the second crossbeam layer 2 are fixedly disposed between the left longitudinal beam and the right longitudinal beam of the vehicle frame. The battery pack is fixedly disposed at a side of the front-dash-board lower crossbeam structure away from a front of the vehicle. In this vehicle, except that the front-dash-board lower crossbeam structure and related components adopt the technical solutions in the above embodiments, structures, connection relationships, installation positions and so on of other devices can refer to the relevant disclosures of the related art and will not be described in detail here.

The technical solution according to the embodiment of the present application has at least the following advantageous technical effects: the front-dash-board lower crossbeam structure in the present application is disposed between the left longitudinal beam and the right longitudinal beam of the vehicle frame, the front-dash-board lower crossbeam structure includes a first crossbeam layer, a second crossbeam layer, and a third crossbeam layer which are connected in sequence; a first connection section and a second connection section are disposed between the second connection plate and the first connection plate, and between the second connection plate and the third connection plate respectively; the second crossbeam layer is disposed at a side of the first crossbeam layer, and a hollow cavity is disposed between the second crossbeam layer and the first crossbeam layer; the second crossbeam layer includes a first reinforcement plate and a second reinforcement plate connected to one another; a third connection section is disposed between the first reinforcement plate and the second reinforcement plate. After the front-dash-board lower crossbeam structure is installed on the vehicle frame, the battery pack is disposed at an side of the front-dash-board lower crossbeam structure away from a front of the vehicle, when the front of the vehicle is subjected to a head-on collision, an impact force is transmitted to the front-dash-board lower crossbeam structure through the left longitudinal beam and the right longitudinal beam of the vehicle frame, and form a collapse deformation guide for the first crossbeam layer and the second crossbeam layer and the hollow cavity between the first crossbeam layer and the second crossbeam layer through the first connection section, the second connection section and the third connection section, that is, after the first crossbeam layer and the second crossbeam layer absorb a collision energy, a deformation begins to occur at the first connection section, the second connection section and the third connection section, and the battery pack is protected by a deformation of the first crossbeam layer and the second crossbeam layer and a space for the deformation provided by the hollow cavity between the first crossbeam layer and the second crossbeam layer. Since projections of the first connection section, the second connection section and the third connection section on the first crossbeam layer are located at different positions, rapid deformations of the first crossbeam layer and the second crossbeam layer at a same position are avoided, and thus an absorption performance for the collision energy of the hollow cavity formed by the first crossbeam layer and the second crossbeam layer is improved, which is advantageous for the front-dash-board lower crossbeam structure to resist a deformation of the vehicle body in an impact direction, thereby improving a safety of the battery pack and the vehicle body.

It should be understood that the terms first, second and so on are only used for distinguishing descriptions and should not be understood as indicating or implying relative importance. Although the terms first, second and so on may be used herein to describe various elements, these elements should not be limited by these terms. These terms are only used to distinguish one element from another. For example, a first element could be termed as a second element, and, similarly, a second element could be termed as a first element, without departing from a scope of illustrative embodiments of the present application.

It should be understood that the term "and/or" in this application is merely a description of the association relationship of associated objects, indicating that three relationships may exist, for example A and/or B may represent three situations: A exists alone, B exists alone, and A and B exist at the same time. The term "land" in this application describes another relationship between associated objects, indicating that two relationships may exist, for example, A/and B can represent two situations: A exists alone, and A and B exist. In addition, the character "I" in this application generally indicates that associated objects before and after the character "I" is an in an "or" relationship.

It should be understood that in the description of the present application, the terms "upper", "vertical", "inside", "outside" and so on indicate orientations or positional relationships that are customarily placed when the disclosed product is used, or are orientations or positional relationships that are customarily understood by those skilled in the art, which are only for the convenience of describing the application and simplifying the description, and do not indicate or imply that the referred device or element must have a specific orientation, be constructed and operated in a specific orientation, and therefore should not be understood as a limitation on the application.

In the description of the present application, it is also necessary to explain that, unless otherwise clearly stipulated and limited, the terms "dispose", "installation" and "connection" should be understood in a broad sense. For example, it may be a fixed connection, a detachable connection, or an integral connection; it may be a direct connection, or an indirect connection through an intermediate medium, or it may be an internal connection between two elements. For those skilled in the art, the specific meanings of the above terms in this disclosure can be understood according to specific circumstances.

The terms used herein is for describing particular embodiments only and is not intended to be limiting of illustrative embodiments of the present application. As used herein, the singular forms "a", "an" and "the" are intended to include the plural forms as well, unless the context clearly indicates otherwise. It should also be understood that the terms "include", "comprise", "contain" and/or "comprising" when used herein specify the presence of stated features, integers, steps, operations, units, and/or components, and do not preclude the presence or addition of one or more other features, numbers, steps, operations, units, components, and/or combinations thereof.

In the following description, specific details are provided to provide a thorough understanding of illustrative embodiments. However, it will be understood by those skilled in the art that illustrative embodiments may be practiced without these specific details. In other embodiments, well-known processes, structures, and techniques may not be shown in unnecessary detail in order to avoid obscuring the illustrative embodiments.

The above are merely specific embodiments of the present application, which enable those skilled in the art to understand or implement the present application. Various modifications to these embodiments will be readily apparent to those skilled in the art, and the generic principles defined herein may be implemented in other embodiments without departing from the spirit or scope of the disclosure. Thus, the present application will not be limited to the embodiments shown herein but is to be accorded the widest scope consistent with the principles and novel features sought for by the application.

## Claims

1. A front-dash-board lower crossbeam structure, comprising a first crossbeam layer and a second crossbeam layer, wherein:
the first crossbeam layer comprises a first connection plate, a second connection plate and a third connection plate which are connected in sequence; an end of the first connection plate away from the second connection plate is configured to be fixedly connected to a left longitudinal beam of a vehicle frame, and an end of the third connection plate away from the second connection plate is configured to be fixedly connected to a right longitudinal beam of the vehicle frame; a first connection section and a second connection section are disposed between the second connection plate and the first connection plate, and between the second connection plate and the third connection plate, respectively;
the second crossbeam layer is stacked at the first crossbeam layer, and a hollow cavity is disposed between the second crossbeam layer and the first crossbeam layer; the second crossbeam layer comprises a first reinforcement plate and a second reinforcement plate which are connected to one another, and a third connection section is disposed between the first reinforcement plate and the second reinforcement plate; and a projection of the third connection section on the first crossbeam layer is staggered with the first connection section and the second connection section; and
the projection of the third connection section on the first crossbeam layer is located between the first connection section and the second connection section; projections of the first connection section, the second connection section and the third connection section on the first crossbeam layer are parallel to one another.

2. The front-dash-board lower crossbeam structure according to claim 1, wherein the first connection section and the second connection section are disposed parallel to one another.

3. The front-dash-board lower crossbeam structure according to claim 1, wherein a plurality of positioning columns are disposed between the first crossbeam layer and the second crossbeam layer, an installation position being provided at a center of the positioning column.

4. The front-dash-board lower crossbeam structure according to claim 1, wherein a cross section along a direction parallel to the first connection section of the first crossbeam layer has a bend.

5. The front-dash-board lower crossbeam structure according to claim 1, wherein a side edge of the second crossbeam layer extends onto and is fixedly connected to the first crossbeam layer.

6. The front-dash-board lower crossbeam structure according to claim 1, wherein the first connection section, the second connection section and the third connection section are welded sections, respectively.

7. The front-dash-board lower crossbeam structure according to claim 1, wherein the second crossbeam layer is provided with reinforcement grooves extending in different directions.

8. A vehicle, comprising a battery pack, a left longitudinal beam and a right longitudinal beam of a vehicle frame, and the front-dash-board lower crossbeam structure according to any one of claims 1 to 7, wherein the first crossbeam layer and the second crossbeam layer are fixedly disposed between the left longitudinal beam and the right longitudinal beam, and the battery pack is fixedly disposed at a side of the front-dash-board lower crossbeam structure away from a front of the vehicle.
